# EUROPEAN PATENT APPLICATION

(11) **EP 2 184 709 A1**
(43) Date of publication of application: **12.05.2010**
(21) Application number: 08783841.3
(22) Date of filing: 01.08.2008
(51) Int. Cl.: G06Q 30/00

(54) **METHOD FOR LOADING ADVERTISEMENT IN ELECTRONIC MAP**

(30) Priority: 03.08.2007 CN 200710025799
(71) Applicant: Suzhou Industrial Park Linkerinfo Ltd., Jiangsu 215021 (CN)
(72) Inventor: SHEN, Hao, Suzhou, Jiangsu 215021 (CN)
(74) Representative: Vandeberg, Marie-Paule L.G.
(86) International application number: PCT/CN2008/071848
(87) International publication number: WO 2009/018763

(57) **Abstract**

A method for loading an advertisement in an electronic map includes the steps of opening the electronic map in a geographic information system (GIS) and identifying a plurality of advertising areas on different display scales. The method also includes recording the attributes of each advertising area, such as the current scale, coordinates, size and shape. At least one 2D advertising graphic is designed according to the attributes of each identified advertising area, to which the shape of the graph adapts. The method further includes placing the designed advertising graph into the corresponding advertising area and then distributing through the GIS. The advertisements appear to be embedded in the electronic map when displayed, thus do not affect the display effect of the electronic map and further enrich the content and reasonably expand function of the electronic map.

## Description

### Field of the Invention

The present invention relates to World-Wide-Web Geographic Information System (WEBGIS) technical field, more particularly to a method for designing and displaying advertisements in electronic map.

### Description of the Related Art

With the entry into an information-based age of the modem society, the development of the communication technology and the internet is changing people's life style tremendously. With the evolvement of the society, the scope of people's activities becomes more and more expansive, also more and more uncertain. The expansiveness and uncertainty bring forth marketing and challenges to the mobile communication, as well as unlimited business opportunities to the carrying out and expanding of the location based service.

Comparing with the conventional paper maps, online electronic map has a higher rapid update rate and a deeper data foundation. The electronic map not only provides users with such information as location, road, traffic, travel, etc., but also daily life information of any aspects as entertainment, food, etc.. Today, the electronic map, which has entered a period of rapid growing, has become a search and reference approach for the majority users before they set out. According to China Online Map Information Service Research Report 2007 published by iResearch, the online map service has entered a golden age of high speed growth. The amount of the users that use the online map for at least once a month has reached 45, 000, 000, which is estimated to reach 90,000,000 in 2008, more than half of the net users. Electronic map has become a new hot spot of the internet development. Many portal websites and search engines are competing to develop online electronic map service.

With the explosive growth of the electronic map users, map search and map advertisement will be another luminescent spot of the Internet marketing. For many enterprises, appearing on the electronic map and being searched is bound to bring about new business chances, which has a high convention rate of the potential customer. So far, the electronic map has already possessed a deep user foundation and become a mature marketing approach. It is regarded as a new marketing approach for enterprises utilizing the electronic map, which has the advantages of high efficiency, low cost, etc..

Of numerous electronic map information systems, GIS (Geography Information System) became quite popular because it greatly facilitated people's travel, activities and everyday life. WEBGIS, the combination of the WEB technology and the GIS, made the applications of the GIS more extensive.

Comparing with the conventional GIS, WEBGIS has its particularity mainly manifested in three aspects:(1)WEBGIS is a network-based client/server system, while most traditional GIS is a stand-alone system; (2)WEBGIS exchanges information between the client and the server utilizing the internet, which means a global transferring of the information;(3)WEBGIS is a distributed system that the client and the server can be distributed at different locations and on different computer platforms.

Several terminologies related to WEBGIS are introduced hereinbelow to help comprehend the WEBGIS.

Vector Map: Vector Map is a storage mode of the excising electronic map data on the basis of rectangular coordinate system, which describes the data model or data organization of the geographic elements with dots, lines and polygons. Each geographic element is described by a sequence of x and y values, which are combined with the attributes of the geographic elements.

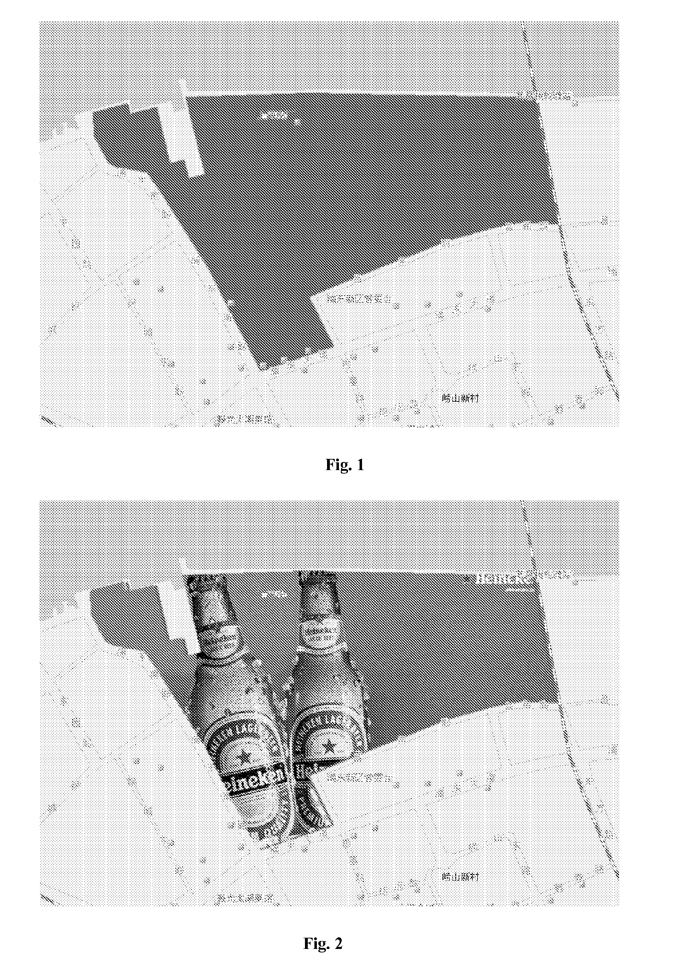

Layer: Layer is a construction mode of the electronic map that is stored in a layer mode, in which the electronic map data is a composite overlapped by the basic layers of dots, lines and planes. For instance in the existing map, there are layers of regionalization, street, water, green, road, POI, which are designed respectively and then arranged in a way that the latter layer is overlapped to the former layer one by one, The above-mentioned POI is the abbreviation for Point Of Interest. The POI layer is arranged at the top of all the layers and contains a plurality of POIs. As shown in figure 1,each POI may contain information of many aspects, such as name, class, latitude, longitude or the like. Strictly speaking, the POIs need on-site collection to assure the accuracy of the information.

Raster Map: Raster Map is another storage mode of the existing electronic map data on the basis of a grid data model formed by a set of rows and columns, which describes the geographic element with a group of grids. Each grid, the value of which represents a real geographic element, is corresponding to a specific name.

Ajax: Ajax, the abbreviation for Asynchronous JavaScript+XML, is a universal technology realization approach to make an electronic map at present. It is not a single technology but a combination of multi-technologies by which the browser could provide the experience of freedom, including XHTML and CSS for controlling the style of the web page, Document Object Model for dynamic display and interaction, XML and XSLT for data interaction and data manipulation, XML Http Request for asynchronous data receiving, JavaScript for banding. Before Ajax, web sites forced the users into a submission/ waiting/refresh displaying mode, which is synchronous with the "think-time" of the server. Ajax provides an ability of asynchronous communication with the server that freed the users from the cycle of Request/Response. With Ajax, User Interface could be updated immediately by calling JavaScript and DHTML as soon as the users pressed the button, meanwhile an asynchronous request is sent to the server to update or query the database. Once the request returns the User Interface is updated accordingly by calling JavaScript and CSS, rather than updating the whole page. Above all, the users are even nonsense about the communication between the browser and the server: the website seems to be real-time response.

JavaScript: JavaScript is a new description language which could be embedded in HTML documents. With JavaScript, the user's request is responded while the network is not longer needed for transferring data. Thus when the user data is input, it is directly processed by the client application, instead of sending the data to the server for processing and then sending back.

One application based on the above-mentioned WebGIS technology is the electronic map (searching) service, which uses keywords or the like as the information retrieval method, applies automated retrieval technology, matches and searches related map information in the map information database according to the user's request, and outputs the results such as place names, locations, traffic routes, calculated paths, or the like, in a certain ranking order. With the development of technology, the application fields of the electronic map expands, the manifestation of the form increases, the expression of the content prospers.

The existing online map loads advertising message depending on the POIs, generally, by adding some text only advertisements or links of the related advertisements to the corresponding POIs. Text only advertisements could only be displayed when the visitors click on, select or mouse over the POI in the former case. As for the later case, pop-up advertising areas usually cover the displaying map once the visitors open the address links of the related advertisements, which could affect the map visibility and bring about much inconvenience for the visitors. Furthermore, both cases are a passive way of loading advertisement in the electronic map depending on the visitors' favor, which has no strong visual effects as well as good advertising effect.

There exist abundant blank areas in the existing electronic map system. Distributing some 2D or multimedia advertisements with these blank areas and pushing advertising information to the visitors could not only make a full use of these areas, but also bring about strong visual effects to the visitors, which achieves good advertising effect without interfering with the normal use, as well as enhances overall appearance esthetic sense of the electronic map.

### SUMMARY OF THE INVENTION

In consideration the defects of the prior art, it is an object of the present invention to provide a method for loading advertisement in an appropriate areas of the 2D electronic map, which brings about strong visual effects to the visitors without affecting the display of the map.

To solve the above-described technological issue, the technical proposal of the present invention is to provide a method for loading advertisement in the electronic map, comprising the steps of:
(a) advertising area identifying: adjusting display scale of the electronic map, identifying a plurality of advertisement groups on different display scales, each of which comprises at least one independent area defined as an advertising area, numbering each identified advertising area, and recording the attributes of each advertising area, such as the current scale, coordinate, size and shape;
(b) advertisement designing: designing at least one 2D advertising graph according to the attributes of each identified advertising area, to which the shape of the graph adapts;
(c) advertisement distributing: placing the designed advertising graph into the corresponding advertising area and distributing through the Geographic Information System.

The identified advertising areas in the step (a) can be apparent blank areas on corresponding display scale.

The identified advertising areas in the step (a) can be areas not affecting the integrality of the original map information on corresponding display scale.

The manifestations of the form of the advertising graph in the step (b) can be 2D or multimedia advertisements.

The advertising graph should not affect the integrality of the original map information.

The advertising graph can be in an irregular shape.

The shape of each advertising area identified in the step (a) should be fit to the shape of the corresponding location on corresponding display scale.

The placing of the designed advertising graph in step (c) can comprise one of inserting, overlapping or replacing.

If outdoor advertisements are arranged on a geographic location while the corresponding area in the electronic map defined as advertising area is identified, into which adverting graph with the content that fits to the content of the geographic location is arranged, it would be easier for visitors to search and confirm the location by the electronic map.

The electronic map comprises at least one of raster map, vector map or 3-D map.

The present invention has the advantages that the advertisements are integrated into the electronic map by loading advertisements into the identified areas with this method. The advertisements seem to be embedded into the electronic map when displayed, not affecting the normal performance of the electronic map, but also further enriching the content and reasonably utilizing the function of the electronic map. Accordingly, great social benefits are brought about by the electronic map that possesses greater value of market and utilization.

### BRIEF DESCRIPTION OF THE DRAWINGS

Fig. 1 is a schematic view of an identified advertising area of the present invention on a certain display scale;
Fig. 2 is a schematic view of the identified advertising area in Fig. 1, which is loaded with an advertisement;
Fig. 3 is a schematic view of the identified advertising area in Fig. 1 on another display scale, which is loaded with an advertisement;
Fig. 4 is a schematic view of the identified advertising area on the same display scale as Fig. 3, which is loaded with a different advertisement.

### DETAILED DESCRIPTION OF THE PREFERRED EMBODIMENTS

The storage mode of electronic map data in the GIS system is divided into vector map and raster map, the constitution and the implementation technique of which have been described in the above-mentioned prior art. Exemplary embodiments of the method for loading advertisement in the electronic map are discussed in details hereinbelow in connection with the two storage modes.

### First Exemplary Embodiment

The method for loading advertisement in a vector electronic map

Firstly the method for loading advertisement on the same display scale is introduced, which comprises the steps of:
(1) opening the electronic map in the GIS, adding a layer for placing a designed advertising graph in the existing electronic map data, which is arranged at the top of the layers of the regionalization, street, water, green, etc., and at the bottom of the layers of the dots, lines such as road, POI, etc.;
(2) identifying a plurality of areas on the display scale, wherein such areas as blanks, residential areas and rivers are identified as advertising areas that the visibility of the electronic map is not affected, and the function of the electronic map is reasonably utilized as well, e.g. the area A as shown in Fig. 1 is an identified advertising area in this exemplary embodiment; recording the attributes such as coordinate, size and shape of the identified advertising area, as well as the current display scale and numbering each identified advertising area which means setting the attribute values of the advertising area and then storing in the database to bring advantages in searching, for terminal users could click on their interested advertisement area on the map to check more information when browsing, and could place an advertisement in the position from their own designs if they hope, by searching the number of the advertising area, the descriptions of the advertisement, the sample advertisement, or the like;
(3) designing an advertisement for the identified advertising area as a multimedia advertisement or a 2D advertisement which is shown by schematic view, as in Fig.1, an advertising graph can be designed according to the shape of the blank area A, the content of which preferably fits to that of outdoor advertisements on the actual geographic location corresponding to the blank area A in the electronic map, to provide more convenience for the visitors to search and confirm the location;
(4) adding the designed 2D or multimedia advertisement into the advertisement layer mentioned in step (1), adjusting the position and the size of the advertising graph to accord with the identified area, as shown in Fig.2;
(5) saving the data of the designed electronic map and distributing through the Geographic Information System (GIS).

In the above-described step (4), attribute values could be added to the designed advertisement, such as number, address of sample advertisement, URL address link, advertisement descriptions, background music, or the like, as well as the display range of the advertisement layer, within which the advertisement is displayed.

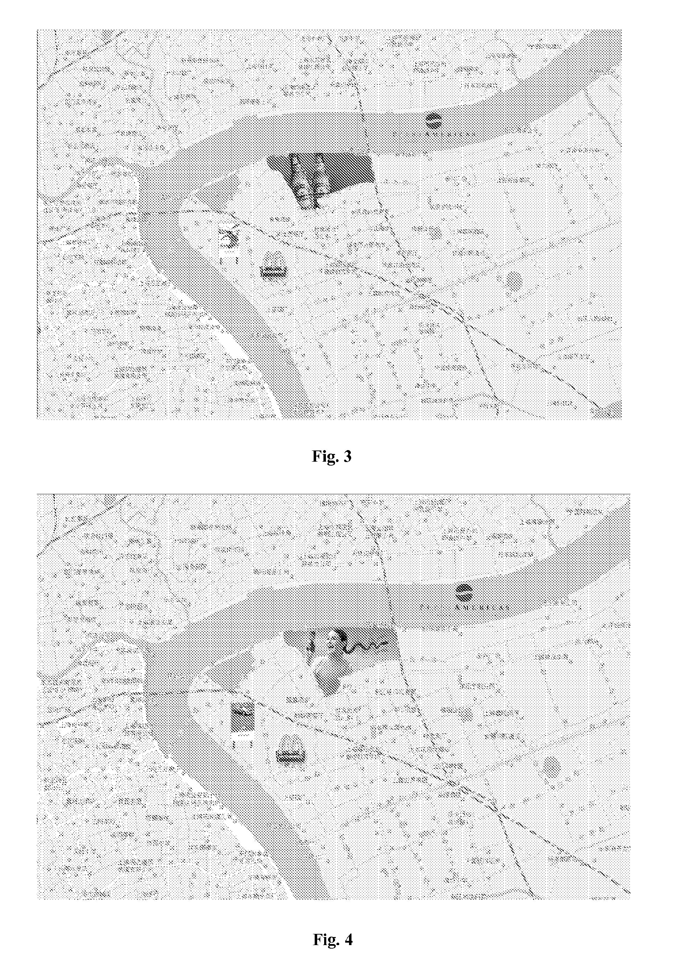

As the method for loading advertisement on the same display scale has been introduced in details in the foregoing description, hereinbelow the steps of the method for loading advertisement on different display scales different from that of the method for loading advertisement on the same display scale will be introduced.
(a) Several advertisement layers adding:
   In order to present different advertisement contents to the visitors on different display scales, several advertisement layers are added, making a perfect combination of the advertisements and the electronic map. Also, the advertisement layers are arranged at the top of the layers of such as regionalization, street, water, green, etc., and at the bottom of the layers of the dots and lines such as road, POI, etc., for not affecting the normal display of the electronic map.
(b) Adjust the display scale of the electronic map to different values, under which a plurality of advertisement groups is identified. Each advertisement group comprises a number of independent areas suitable for placing advertisements defined as advertising areas, which certainly are blank areas. Similarly, record the attributes of each advertising area of each advertisement group, such as the current scale, coordinate, size and shape, and number each identified advertising area, which means setting the attribute values of the advertising areas and then storing in the database for the convenience of searching, displaying and updating the content of the advertisements. As the display scale increases, the number of blank areas increases and so is the area of the same blank area, and vice versa.
(c) Design at least one 2D or multimedia advertisement according to each of the advertising areas on different display scales, which the shape of the advertisement adapts to. The same advertisement could be placed into the same advertising area as shown in Fig.2 and Fig.3, which is zoomed in or zoomed out synchronously with the increasing or decreasing of the display scale. Different advertisements could also be placed into one advertising area on different display scales as shown in Fig.2 and Fig.4, which greatly increases the flexibility of the electronic map.
(d) The designed advertisements are added into the corresponding advertisement layer according to the different display scales, then the electronic map loaded with advertisements is distributed through the GIS in a way on one display scale.

### Second Exemplary Embodiment

The WEBGIS system on the basis of raster map data displays the electronic map in a process of setting a number of display scales, creating map graphs on the designated scales by the GIS, matching the map slices created in advance into a whole on the map display page in a dynamic way by calling JAVASCRIPT and AJAX.

The method for loading advertisement in the raster map data, comprises the steps of:
(1) identifying a plurality of areas suitable for placing advertisements, i.e. advertising areas, in the electronic map on the same display scale, wherein the advertising areas should be blank areas for not affecting normal display of the electronic map; setting the attribute values of the identified advertising areas for the convenience of searching, displaying and updating the content of the advertisements, such as coordinate, size, shape, number, or the like, for end users to check more information by clicking on an interested advertisement position on the map when browsing, and be able to place an advertisement in the position from their own designs if they hope, by searching the number of the advertising area, the description of the advertisement, the sample advertisement, or the like;
(2) designing corresponding 2D or flash advertisements according to the shape and the size of each identified advertising areas;
(3) finding the names of the one or more grid graph corresponding with each advertising area;
(4) judging whether each advertising area is corresponding to one or more grid graph, going on to step (5) in the former case, while skipping to step (6) in the latter case;
(5) modifying the original grid graph, placing the designed advertisement into the grid graph;
(6) slicing the designed advertisement according to the position and the shape of each grid graph and replacing into the corresponding areas, which are matched into a whole when the map is displayed;
(7) adding the names of the graph related with the advertisement in the service database, together with other related attributes, such as URL address link, hotspots, description of the advertisement, background music, or the like;
(8) repeating the foregoing steps and loading the advertisements one by one in the advertising areas of the electronic map on different display scales; and finally distributing through the GIS.

In the foregoing description one method for loading advertisement in raster map data has been introduced, and an alternative exemplary embodiment of the method will be discussed as follows, which comprises the steps of:
(1) identifying a plurality of areas for setting advertisements, i.e. the advertising areas, in the electronic map of the same display scales, which also should be blank areas for not affecting the normal display of the electronic map; setting the attribute values of the identified advertising areas for the convenience of searching, displaying and updating the content of the advertisements, such as coordinate, size, shape, number, or the like, for end users to check more information when browsing by clicking on the interested position of the advertisement on the map, and place an advertisement in the position from their own designs if they hope, by searching the number of the advertising area, the description of the advertisement, the sample advertisement, or the like;
(2) designing corresponding 2D or flash advertisements according to the shape and the size of each identified advertising area;
(3) adjusting the coordinates of a DIV layer in the electronic map to cover the advertising area exactly, adding the coordinate position of the layer and the storage address of the advertisement to the attributes of the advertising areas;
(4) judging whether advertisements exist in the current display region by calling AJAX when the original map displayed and if so, creating the overlapped display layers to distribute advertisements according to the coordinate position of the layer and the address of the advertisements by calling JAVASCRIPT.

The map advertisements distributed in the method described in the disclosed exemplary embodiments are advertisement hotspots set on the designated advertising areas according to different map application systems on the blanks of the map or on the locations that not affect the display of the map. The setup and the designation of the advertising areas could be applied to map systems, such as 2-D maps, 3-D maps or satellites maps, etc. The advertisements are forced-display styles distributed on the map or active-triggering smart styles when presenting to the visitor. Visitors could move the mouse into the interested advertisement hotspot on the map when browsing, and then the content of pop-up advertisements on the map is switched into the information of the advertisement. Visitors could read the content of the advertisement, as well as click the advertisement to enter the linked-sites containing the content of the advertisement. The map advertisements could involve multiple forms such as graphical article advertisement, advertisement playing by turns, flash advertisement, video advertisement, or the like, which brings about tremendous visual experience to the visitors! The profit model of the map service could brings about significant revenue to the map service provider and the advertiser, which also enriches the content of the map web-sites, providing a better map information service to the visitors.

Hence, a web map advertisement service platform on the basis of map is formed according to the present invention. The advertisers can find a suitable advertising area on the map by themselves and submit the designed advertisement which would appear on the map after the approval. The hotspot advertising areas at the same position could even be sold on the basis of different time sections, which could also provide a more accurate advertising display service according to the favor of the visitors, e.g. locations, interests. The implementation of the patent can provide convenience to advertisers to display its graphical advertisement, flash advertisement, video advertisement, etc. on the map system as a more convenient map advertisement display platform, and fulfill advertiser's requirements of more diversified and vivid advertisement display to maximize it's commercial value.

## Claims

1. A method for loading advertisement in an electronic map, comprises the steps of:
(a) advertisement areas identifying: adjusting display scale of the electronic map, identifying a plurality of groups of advertisements on different display scales, each of which comprises at least one independent area defined as an advertisement area, numbering each identified advertisement area, and recording the attributes of each advertisement area, such as said current scale, coordinate, size and shape;
(b) advertisement designing: designing at least one 2D advertisement graph according to the attributes of each identified advertisement area, which the shape of said graph adapts to;
(c) advertisement distributing: placing said designed advertisement graph into the corresponding advertisement area and distributing through Geographic Information System.

2. The method as claimed in claim 1, wherein, said identified advertising areas in the step (a) are apparent blank areas on corresponding display scale.

3. The method as claimed in claim 1, wherein, said identified advertising areas in the step (a) are areas not affecting the integrality of the original map information on corresponding display scale.

4. The method as claimed in claim 1, wherein, the manifestations of the form of said advertising graph in the step (b) are 2D or multimedia advertisements.

5. The method as claimed in claim 4, wherein, said advertising graph has no influence on the integrality of the original information of the map.

6. The method as claimed in claim 4, wherein, said advertising graph is in an irregular shape.

7. The method as claimed in claim 1, wherein, the shape of each advertising area in the step (a) fits to the shape of its corresponding location on corresponding display scale.

8. The method as claimed in claim 1, wherein, placing the designed advertisement graph into the corresponding advertisement area in the step (c) comprises one of inserting, overlapping or replacing.

9. The method as claimed in claim 1, wherein, an area is identified as an advertising area on the electronic map corresponding to a real geographic location where an outdoor advertisement is arranged, in which adverting graph with the content consistent with the content of the outdoor advertisement on the geographic location is emplaced.

10. The method as claimed in claim 1, wherein, said electronic map comprises one of raster map, vector map or 3-D map.
